# EUROPEAN PATENT APPLICATION

(11) **EP 4 567 286 A1**
(43) Date of publication of application: **11.06.2025**
(21) Application number: 23849351.4
(22) Date of filing: 31.07.2023
(51) Int. Cl.: F16B 12/20, F16B 5/02

(54) **CONNECTING ASSEMBLY AND CONNECTING SYSTEM**

(30) Priority: 02.08.2022 CN 202222024283 U
(71) Applicant: Guangzhou Jinio Technology Development Co., Ltd., Guangzhou, Guangdong 510700 (CN)
(72) Inventor: LIN, Xiaoqun, Guangzhou, Guangdong 510700 (CN); LIN, Xiaohuan, Guangzhou, Guangdong 510700 (CN); SU, Weisheng, Guangzhou, Guangdong 510700 (CN); GUO, Yuwu, Guangzhou, Guangdong 510700 (CN)
(74) Representative: Marks & Clerk LLP
(86) International application number: PCT/CN2023/110223
(87) International publication number: WO 2024/027644

(57) **Abstract**

The present invention discloses a connecting assembly and a connecting system, the connecting assembly comprises a reinforcing part, a cam and a plug, the reinforcing part has a connecting end and a mounting end positioned opposite each other, the end of the connecting end has a connecting passage, and the side surface of the connecting end has at least one deformation gap, a part of the connecting end is defined by the deformation gap to form at least one elastic part, the outer side surface of the elastic part has a fastening protrusion; the outer side surface of the reinforcing part has a mounting space connected to the connecting passage; the cam is rotatably installed in the mounting space; the plug has an inserting passage running through both ends of the plug, with one end of the plug inserted into the connecting passage from the connecting end; the plug can switch between a released position and a locked position; when the plug switches from the released position to the locked position, the plug drives at least a part of the elastic part to elastically deform and expand outward; according to the connecting assembly of present invention, the reinforcing part can be easily removed from the mounting passage, making the operation convenient.

## Description

### Technical Field

The present invention relates to a connecting assembly and a connecting system used to connect a first member and a second member, especially for connecting furniture panels.

### BACKGROUND OF THE INVENTION

At present, with the continuous improvement of people's aesthetic concepts, tend to be invisible connectors are gradually used to realize connections between two furniture panels, thereby improving the aesthetics of furniture or equipment, wherein 2-in-1 or 3-in-1 or 4-in-1 connectors are widely used in the connection between two furniture panels. However, if use the existing three-in-one connector, it will make the cam diameter of the panel is relatively large (usually larger than or equal to 10 mm), and users can easily observe the cam through the larger hole diameter, resulting in lower invisibility of the three-in-one connector, affecting the aesthetics of the furniture.

To this end, Chinese Patent Application Publication No. CN216519026U discloses "A reinforcing part, Connecting assembly, and Connecting System", firstly the cam is pre-mounted on the reinforcing part, then the cam is inserted into the mounting passage of the first member from one side of the panel along with the reinforcing part, so that the cam is connected to the first mounting hole of the first member, a tool such as a screwdriver passes through the first mounting hole to drive the cam and the connecting bolt to lock with each other, thereby completing the invisible connection between the first member and the second member. Since the cam does not need to be installed into the panel through the first mounting hole, the hole diameter of the first mounting hole only needs to be passed through by a tool such as a screwdriver, which greatly reduces the hole diameter of the first mounting hole, thereby improving the Invisibility of the cam on the plate.

However, the reinforcing part in the existing technology of prior art is fastened inside the panel by fastening it with the countersunk teeth, which makes it difficult to remove the reinforcing part from the panel after mounting, when the reinforcing part has an mounting position deviation or the reinforcing part and the panel need to be separated from each other, the reinforcing part can be removed only after the plate is broken, the operation is difficult and the efficiency is low, at the same time, it is not conducive to the aesthetics or recyclic use of the plate.

### Invention content

In order to solve the technical problem in the prior art that the reinforcing part can be removed from the panel, the first aspect of the present invention provides a connecting assembly, it comprises :
a reinforcing part , the reinforcing part has a connecting end and a mounting end positioned opposite each other, the end of the connecting end has a connecting passage, and the side surface of the connecting end has at least one deformation gap, a part of the connecting end is defined by the deformation gap to have at least one elastic part, the outer side surface of the elastic part has a fastening protrusion; the outer side surface of the reinforcing part has a mounting space connected to the connecting passage;
the cam is rotatably installed in the mounting space; and
a plug, the plug has an inserting passage running through both ends of the plug, with one end of the plug insert into the connecting passage from the connecting end;
at least a part of the inserting passage is used to cooperate with an external tool for insertion to drive the plug to move in the connecting passage; or, at least a part of the inserting passage is used to cooperate with an external tool for insertion to drive the plug to rotate in the connecting passage;
wherein the inner side surface of the inserting passage has at least one operating plane or operating bump or operating groove; or, the cross-sectional shape of at least a part of the inserting passage matches the cross-sectional shape of the inner ring of the sleeve;
wherein the plug can switch between a released position and a locked position; when the plug switches from the released position to the locked position, the plug drives at least a part of the elastic part to elastically deform and expand outward.

In some embodiments, it comprises two deformation gaps, these two deformation gaps are respectively arranged on the left and right sides of the connecting end, and the left and right sides of the connecting end are respectively defined by the deformation gaps to form the elastic part.

In some embodiments, in the observation direction, from the connecting end to the mounting end, the reinforcing part is a circular shape.

In some embodiments, the inner side surface of the elastic part and the inner side surface of the connecting passage jointly define to form a first internal threaded part, and the outer peripheral side surface of the plug form a first external threaded part threadedly connected with the first internal threaded part.

In some embodiments, along the direction from the connecting end to the mounting end, the cross-sectional shape and area of the connecting passage in the part of the elastic part are the same, and the cross-sectional area of the outer circumference the place of the outer contour of the fastening protrusion is located is larger than the cross-sectional area of the outer circumference the place of the outer contour of the mounting end is located.

In some embodiments, along the direction from the connecting end to the mounting end, the inner side surface of the elastic part gradually approaches the central axis of the connecting passage.

In some embodiments, the inner peripheral surface of the connecting passage is smooth, on the inner side surface of the elastic part closed to one end of the mounting space has a connecting ring part, the outer peripheral side of the connecting ring part is arranged at a distance to the inner peripheral side of the connecting passage, the inner peripheral side of the connecting ring part has a second internal thread part ,the outer side circumference of the plug has a second external thread part threadedly connected to the second internal thread part.

In some embodiments, the inner peripheral surface of the connecting passage is smooth; along the direction from the connecting end to the mounting end, the inner side surface of the elastic part closed to one end of the mounting space gradually approaches the central axis of the connecting passage;
the outer peripheral surface of the plug is smooth, and on the outer side surface of one end of the plug has an unlocked groove .

In some embodiments, it also comprises a connecting bolt; one end of the connecting bolt protrudes to form a connecting boss, the other end of the connecting bolt is provided with a mounting part, an operating part is fixedly provided between the connecting boss and the mounting part, the operating part and the connecting boss are arranged in a distance to form a connecting groove, the operating part is used to be driven by an external tool to drive at least a part of the connecting bolt to rotate, and the operating part is made of plastic; wherein the outer side surface of the operating part has at least one operating plane or operating hole or operating bump or operating groove, or the cross section of the operating part is adapted to the cross section of the sleeve;
the cam has an eccentric groove, and at least one inner side surface of the eccentric groove is provided with a clamping arm; the cam can rotate in the rotation direction between the released position and the locked position;
wherein, when the cam is in the released position, the connecting boss passes through the inserting passage and is inserted into the eccentric groove; when the cam is in the locked position, the clamping arm restricts the connecting boss from being pulled out of the eccentric groove.

In addition, the second aspect of the present invention provides a connecting system, including a first member and a connecting assembly as described in the first aspect above;
on one side of the first member has a mounting passage , and a connecting hole connected to the mounting passage is provided on the top or bottom of the first member; the reinforcing part is inserted into the mounting passage,
and the position of mounting space corresponds to the position of the connecting hole and connected each other ,so that the cam is connected to the connecting hole;
when the plug is switched from the released position to the locked position, the plug drives at least a part of the elastic part to to elastically deform and expand outward, so that the fastening protrusion is pressed against the inner side surface of the mounting passage.

Based on the technical solutions of the first aspect and the second aspect of the present invention, compared with the prior art, the connecting assembly and the connecting system of the present invention have the following beneficial effects:
The reinforcing part is inserted into the mounting passage of the first member and can easily slide in the mounting passage, and an outer side wall of the reinforcing part and an inner side wall of the mounting passage are mutually adhered or nearly adhered, so that the reinforcing part can be easily inserted into the mounting passage or pulled out from the mounting passage. after the reinforcing part is inserted into the mounting passage, one end of the plug is inserted into the connecting passage, when the plug is switched from a released position to a locked position, the plug drives at least a part of the elastic part of the reinforcing part to elastically deform and expand outward.,
so that the fastening protrusion on the elastic part abuts against the inner side wall of the mounting passage, increasing the sliding friction force of the reinforcing part in the mounting passage, so that the reinforcing part is difficult to slide in the mounting passage, This secures the reinforcing part in the mounting passage. when it is necessary to remove the reinforcing part from the first member, adjusting the plug to a released position so as to restore the elastic part to an original state, the effect of tightly butting the fastening protrusion on the elastic part and the mounting passage is released, so that the reinforcing part can freely slide in the mounting passage, Thus, the reinforcing part is easily pulled out from the mounting passage, the operation is convenient and the efficiency is high, and the first member is prevented from being damaged, This effectively ensures the integrity and aesthetics of the panel, and is beneficial to the recycling of the panel.

In order to solve the technical problem in the prior art that a reinforcing member can be removed from a plate, a third aspect of the present invention provides a connecting assembly, comprising:
A reinforcing part, the reinforcing part has a connecting end and a mounting end opposite to each other, the end of the connecting end has a connecting passage, the mounting end has an eccentric hole connected with the connecting passage, the outer side surface of the mounting end has a deformation gap connected with the eccentric hole, and the outer side surface of the mounting end has a fastening protrusion; and
a cam, the outer peripheral surface of the cam is an eccentric arc surface, and the outer peripheral surface of the cam is matched with the inner peripheral surface of the eccentric hole, and the cam is rotatably installed in the eccentric hole;
wherein, the cam can rotate between release position and locked position in a rotation direction; when the cam rotates from the release position to the locked position, the cam drives a part of the side surface of the mounting end to elastically deform and expand outward.

In some embodiments, the reinforcing part is circular shape when viewed from the connecting end to the mounting end.
In some embodiments, at least a part of the connecting passage is used to cooperate with an external tool for insertion to drive the reinforcing part to rotate;
the inner side surface of the connecting passage has at least one operating plane or operating protrusion or operating groove; or the cross-sectional shape of at least a part of the connecting passage is the same as the cross-sectional shape of the inner ring of the sleeve.

In addition, the fourth aspect of the present invention provides a connecting system, comprising a first member and a connecting assembly as described in the third aspect above;
on one side of the first member has a mounting passage , and on the top or bottom of the first member has a connecting hole connected to the mounting passage; the reinforcing part is inserted into the mounting passage, and the eccentric hole corresponds to the position of the connecting hole and connected each other, so that the cam is connected to the connecting hole;
when the cam rotates from the release position to the locked position, the cam drives a part of the side surface of the mounting end to elastically deform and expand outward, so that the fastening protrusion is pressed against the inner side surface of the mounting passage.

Based on the technical solutions of the third aspect and the fourth aspect of the present invention, compared with the prior art, the connecting assembly and the connecting system of the present invention have the following beneficial effects:
The reinforcing part is inserted into the mounting passage of the first member and can easily slide in the mounting passage, and an outer side wall of the reinforcing part and an inner side wall of the mounting passage are mutually adhered or nearly adhered, so that the reinforcing part can be easily inserted into the mounting passage or pulled out from the mounting passage. after the reinforcing part is inserted into the mounting passage, a tool such as a screwdriver passes through the connecting hole to drive the cam to rotate from a released position to a locked position, so that a part of the side wall of the cam drive mounting end is elastically deform and expand outward. so that the fastening protrusion on the elastic part abuts against the inner side wall of the mounting passage, increasing the sliding friction force of the reinforcing part in the mounting passage, so that the reinforcing part is difficult to slide in the mounting passage, This secures the reinforcing part in the mounting passage. when it is need to remove the reinforcing part from the first member, adjusting the plug to a released position so as to restore the elastic part to an original state, the effect of tightly butting the fastening protrusion on the elastic part and the mounting passage is released, so that the reinforcing part can freely slide in the mounting passage, Thus, the reinforcing part is easily pulled out from the mounting passage, the operation is convenient and the efficiency is high, and the first member is prevented from being damaged, This effectively ensures the integrity and aesthetics of the panel, and is beneficial to the recycling of the panel.

### Description of drawings

Figure 1 is a schematic diagram of the first structure of the connecting assembly of Embodiment 1 of the present invention;
Figure 2 is a cross-sectional view of Figure 1;
Figure 3 is a schematic diagram of the structure of a cam pre-installed on the reinforcing part of Embodiment 1 of the present invention;
Figure 4 is a cross-sectional view of Figure 3;
Figure 5 is a schematic diagram of the structure of the reinforcing part of the connecting assembly of Figure 1;
Figure 6 is a cross-sectional view of Figure 5;
Figure 7 is a cross-sectional view of Figure 5;
Figure 8 is another schematic structural diagram of the reinforcing part of the connecting assembly of Figure 1;
Figure 9 is a cross-sectional view of Figure 8;
Figure 10 is a structural schematic diagram of the plug of the connecting assembly of Figure 1;
Figure 11 is a schematic diagram of the connecting assembly of Figure 1 applied to the connecting system composed of the first member;
Fig12 is a schematic diagram of the connection between the connecting assembly and the connecting bolt of Figure 1 ,with the cam is located in a released position;
Figure 13 a schematic diagram of the connection between the connecting assembly and the connecting bolt of Fig 1,with the cam is in a locked position;
Figure 14 a schematic diagram of the disassembly of the connecting assembly and the connecting bolt of Figure 1 applied to the first member and the second member;
Figure 15 is a cross-sectional view of Figure 14 in a connected state;
Figure 16 is an enlarged view of the G part in Figure 15;
Figure 17 is a second schematic diagram of the reinforcing part of Embodiment 1 of the present invention;
Figure 18 is a cross- sectional view of Figure 17;
Figure 19 is another structural schematic diagram of the reinforcing part of the connecting assembly in Figure 1 ;
Figure 20 is a cross-sectional view of Figure 19 ;
Figure 21 is a second structural schematic diagram of the connecting assembly of Embodiment1 of the present invention;
Figure 22 is a cross-sectional view of Figure 21 ;
Figure 23 is a schematic diagram of the structural of reinforcing part of the connecting assembly of Figure 21;
Figure 24 is a schematic diagram of the structure after partial sectioning of Figure 23;
Figure 25 is a cross-sectional view of Figure 23;
Figure 26 is a schematic diagram of the structure of the plug of the connecting assembly in Fig 21;
Figure 27 is a sixth structural schematic diagram of the reinforcing part of Embodiment 1 of the present invention;
Figure 28 is a cross-sectional view of Figure 27;
Figure 29 is a structural schematic diagram of the plug connected with the reinforcing part in Figure 27;
Figure 30 is a structural schematic diagram of the connecting assembly of Embodiment 2 of the present invention;
Figure 31 is a structural schematic diagram of the reinforcing part of the connecting assembly of Figure 30
Figure 32 is a structural schematic diagram of the connection between the connecting assembly and the connecting bolt of Figure 31 ,the cam is in released position;
Figure 33 is a schematic diagram of the connection between the connecting assembly and the connecting bolt of Figure 31,with the cam located in the locked position;
Figure 34 is a schematic diagram of the disassembly of a connecting assembly and a connecting bolt of Figure 31 applied to the first member and the second member;

### Specific Embodiment Manners

Accompanying drawings and embodiments, present invention will be further described to the specific implementation manners. The following embodiments are used to illustrate the present invention, but not to limit the scope of the present invention.

In the description of the present invention, what need to understand are the terms "center", "longitudinal", "transverse", "length", "width", "thickness", "upper", "lower", "front", " Orientation or position indicated by "back", "left", "right", "vertical", "horizontal", "top", "bottom", "inner", "outer", "clockwise", "counterclockwise" etc the relationship is based on the orientation or positional relationship shown in the drawings, and is only for the convenience of describing the present invention and simplifying the description, rather than indicating or implying that the referred device or element must have a specific orientation, be constructed and operated in a specific orientation, therefore It should not be construed as a limitation of the present invention.

In addition, the terms "first", "second" are only used to describe the purposes, and cannot be construed as indicating or implying relative importance or implicitly specifying the quantity of indicated technical features. Thus, a feature defined as "first", "second" may explicitly or implicitly include one or more of these features. In the description of the present invention, "plurality" means two or more, unless otherwise specifically defined.

In the present invention, unless otherwise clearly specified and limited, the terms such as "installation", "connection", "connection" and "fixation" should be understood in a broad sense, for example, it can be a fixed connection or a detachable connection, or integrated; it can be mechanically connected or electrically connected; it can be directly connected or indirectly connected through an intermediary, and it can be the internal communication of two components or the interaction relationship between two components. Those of ordinary skill in the art can understand the specific meanings of the above terms in the present invention according to specific situations.

In the present invention, unless otherwise clearly specified and limited, a first feature being "on" or "under" a second feature include direct contact between the first and second features, and also include the first and second features not in direct contact but through another characteristic contact between them. Moreover, "above", "on" and "up" the first feature on the second feature include that the first feature is directly above and obliquely above the second feature, or simply means that the first feature is horizontally higher than the second feature. "Below", "beneath" and "under" the first feature to the second feature include that the first feature is directly below and obliquely below the second feature, or simply means that the first feature has a lower level than the second feature.

In the present invention, one of the two interconnected furniture panels is set as the first member and the other is set as the second member. the shapes or materials of the first member and the second member may be the same or different, the shapes may be, for example, a plate, a block, or a column, etc ,the materials may be wood, plastic, metal, or a polymer synthetic material, etc., or a combination thereof, which is not limited here.

### Embodiment 1

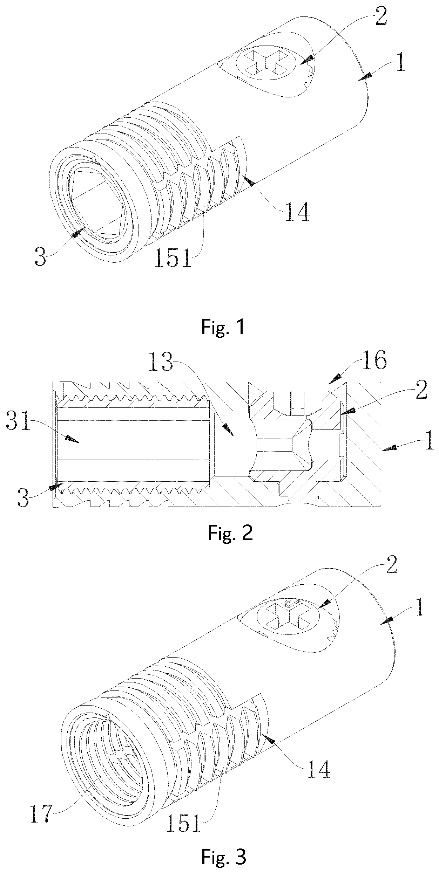

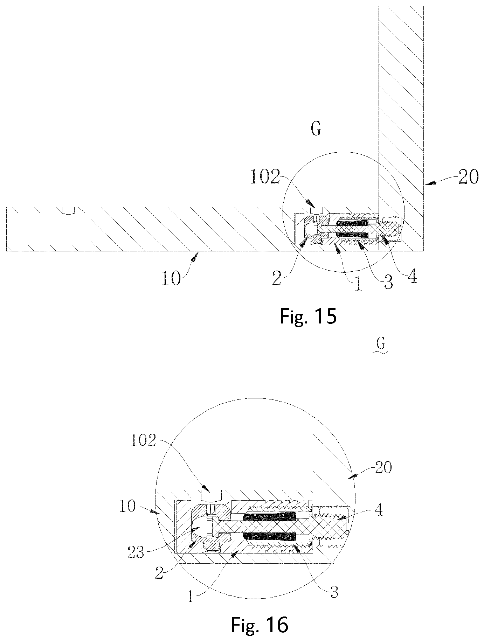

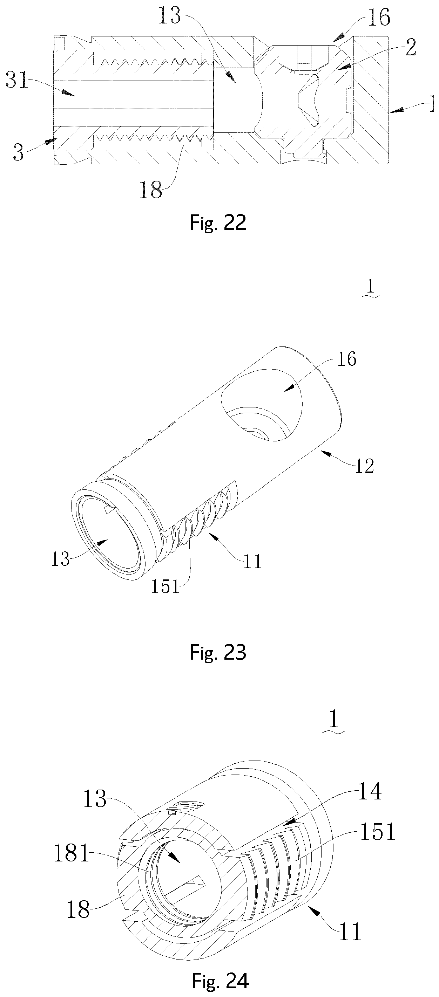

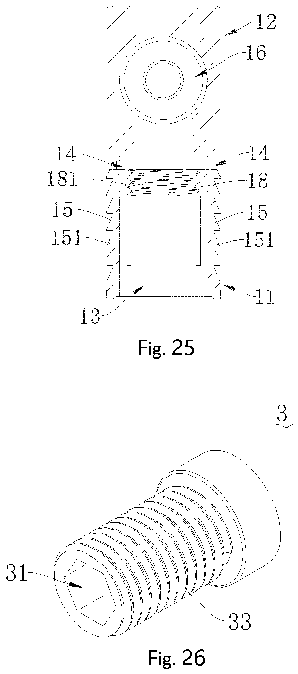

As shown in Figure 1 to Figure 29, Embodiment 1 of the present invention discloses a connecting assembly, the connecting assembly comprises a reinforcing part 1, a cam 2 and a plug 3, the reinforcing part 1 has a connecting end 11 and a mounting end 12 positioned opposite each other, the end of the connecting end 11 has a connecting passage 13, and the side surface of the connecting end 11 has at least one deformation gap 14, a part of the connecting end 11 is defined by the deformation gap 14 to form at least one elastic part 15, the outer side surface of the elastic part 15 has a fastening protrusion 151; the outer side surface of the reinforcing part 1 has a mounting space 16 connected to the connecting passage 13; the cam 2 is rotatably installed in the mounting space 16; the plug 3 has an inserting passage 31 running through both ends of the plug 3, with one end of the plug 3 inserted into the connecting passage 13 from the connecting end 11 ; at least a part of the inserting passage 31 is used to cooperate with an external tool for insertion to drive the plug 3 to move in the connecting passage 13; or, at least a part of the inserting passage 31 is used to cooperate with an external tool for insertion to drive the plug 3 to rotate in the connecting passage13 ; wherein the inner side surface of the inserting passage 31 has at least one operating plane or operating bump or operating groove; or, the cross-sectional shape of at least a part of the inserting passage 31 matches the cross-sectional shape of the inner ring of the sleeve; wherein the plug 3 can switch between a released position and a locked position; when the plug 3 switches from the released position to the locked position, the plug 3 drives at least a part of the elastic part 15 to elastically deform and expand outward.

During use, firstly the cam 2 is pre-mounted on the mounting space 16 of the reinforcing part 1, and is rotatable in the mounting space 16, the cam 2 and the reinforcing part 1 are mounted into the first member 10 from one side of the first member 10, and a tool such as a screwdriver passes through a top or a bottom of the first member 10 to drive the cam 2 to rotate in the mounting space 16, so that the cam 2 and the connecting bolt 4 are mutually locked or released. Since the cam 2 does not need to be mounted to the inside of the first member 10 from the top or bottom of the first member 10, the hole diameter of the first mounting hole only needs to be passed through by a tool such as a screwdriver, which greatly reduces the hole diameter of the first mounting hole, thereby improving the Invisibility of the cam 2 on the first member.

Embodiment 1 of the present invention does not limit the specific shape and size of the mounting space 16, and is specifically designed according to the shape and size adaptability of the cam 2, as long as the cam 2 can rotate in the mounting space 16.

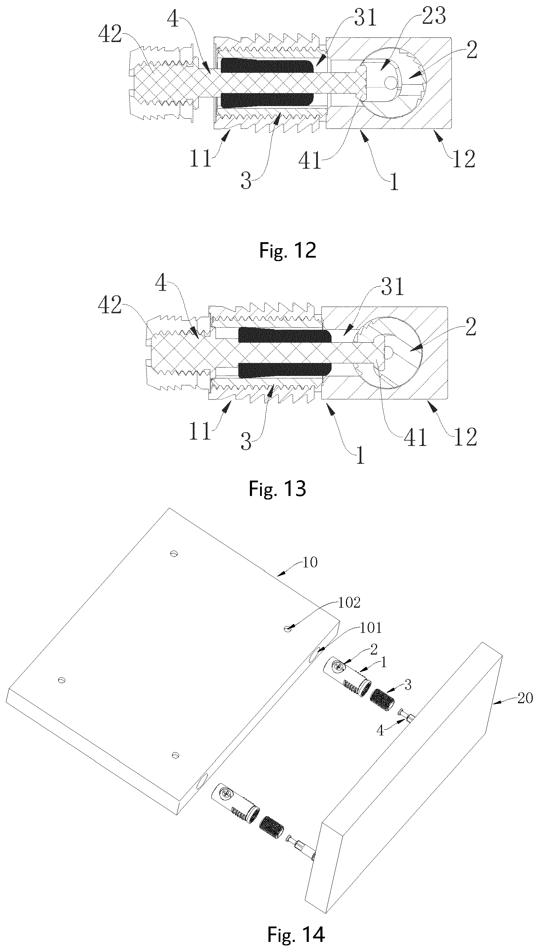

In order to mount the cam 2 into the interior of the first member 10 through the reinforcing part 1 of the Embodiment 1 of the present invention, as shown in Figure 14 to 16, Firstly the side of the first member 10 connected to the second member 20 have a mounting passage 101, specifically, it is processed on the side surface of the first member 10 by drilling (such as a hexagonal drilling), and the cross-sectional shape of the mounting passage 101 is adapted to the cross-sectional shape of the reinforcing part 1, and the cross-sectional area of the mounting passage 101 is equal to or slightly larger than the cross-sectional area of the reinforcing part 1, so that during the process of the reinforcing part 1 is inserted into the mounting passage 101, the outer side surface of the reinforcing part 1 and the inner side surface of the mounting passage 101 attached to or are nearly attached to or there is a very small gap, so that the reinforcing part 1 can be easily inserted into the mounting passage 101 or pulled out of the mounting passage 101. In addition, a connecting hole 102 communicating with the mounting passage 101 is processed on the top or bottom of the first member 10 by drilling process ( the diameter of the connecting hole 102 only needs to be passed through by a tool such as a screwdriver), when the reinforcing part 1 is inserted into the mounting passage 101, the position of the mounting space 16 corresponds to and communicates with the position of the connection hole 102, a screwdriver or other tool can directly drive the cam 2 to rotate in the mounting space 16 after passing through the connecting hole 102.

Furthermore, the mounting passage 101 is formed by a drilling process, in order to adapt to the cross-sectional shape of the mounting passage 101, the reinforcing part 1 is cylindrical or frustum-shaped, that is, in the observation direction, from the connecting end to the mounting end, the reinforcing part 1 is a circular shape. so that the reinforcing part 1 can be more easily inserted into the mounting passage 101.

Because the sliding friction between the reinforcing part 1 and the mounting passage 101 is relatively small, the reinforcing part 1 is easily pulled out from the mounting passage 101. Therefore, after the reinforcing part 1 is inserted into the mounting passage 101 of the first member 10, one end of the plug 3 is inserted into the connecting passage 13, when the plug 3 switches from the released position to the locked position, the plug 3 drives at least a part of the elastic part 15 of the reinforcing part 1 to elastically deform and expand outward, the fastening protrusion 151 on the elastic part 15 is pressed against the inner side surface of the mounting passage 101 to increase the sliding friction of the reinforcing part 1 in the mounting passage 101, so that the reinforcing part 1 is difficult to slide in the mounting passage 101, thereby fastening the reinforcing part 1 in the mounting passage 101..when it is need to remove the reinforcing part 1 from the first member 10, adjusting the plug 3 to a released position so as to restore the elastic part to an original state, the effect of tightly butting the fastening protrusion 151 on the elastic part 15 and the mounting passage 101 is released, so that the reinforcing part 1 can freely slide in the mounting passage 101, Thus, the reinforcing part 1 is easily pulled out from the mounting passage 101, the operation is convenient and the efficiency is high, and the first member 10 is prevented from being damaged, This effectively ensures the integrity and aesthetics of the panel, and is beneficial to the recycling of the panel.

It should be noted that, Embodiment 1 does not limit the outer contour shape of the plug 3, for example, the outer contour shape of the cross section of the plug 3 is circular or oval or waist-shaped shape, and the shape of the cross section of the connecting passage 13 is adapted to the outer contour shape of the plug 3. meanwhile, the length dimension of the connecting passage 13 is larger than the length dimension of the plug 3, so that the plug 3 can be fully inserted into the interior of the connecting passage 13 to achieve an invisible connection between the first member 10 and the second member 20.

The released position of the Embodiment 1 refers to the position of the plug 3 when the elastic part 15 is not elastically deformed, specifically, the plug 3 is not inserted into the connecting passage 13 or a part of the plug 3 is inserted into the connecting passage 13. The locked position refers to the position of the plug 3 when the elastic part 15 elastically deformed, specifically, the plug 3 is completely inserted into the connecting passage 13 or a part of the plug 3 is inserted into the connecting passage 13. When the plug 3 from the released position to the locked position, the elastic part 15 gradually elastically deformed , and the fastening protrusion of the elastic part 15 has an increasingly greater pressing effect on the inner side surface of the connecting passage 13, when the plug 3 is fully inserted into the connecting passage 13, the fastening protrusion of the elastic part 15 has a maximum pressing effect on the inner side surface of the connecting passage 13, at this time, the fastening effect of the reinforcing part 1 in the connecting passage 13 is the best.

In order to control the plug 3 to switch between the released position and the locked position, the Embodiment 1 inserts by external tool (such as a column, etc.) into the inserting passage 31, and the position of the plug 3 in the reinforcing part 1 is adjusted by driving the plug 3 to rotate in the connecting passage 1. Wherein in order to drive the plug 3 to rotate after the external tool (such as a column, etc.) is inserted into the inserting passage 31, at least a part of the cross-sectional shape of the inserting passage 31 is non-circular, for example, the cross section of a part of the inserting passage 31 close to its opening is non-circular, and the cross section of another part of the inserting passage 31 is circular; or for another example, the cross section of the overall inserting passage 31 is the same and non-circular. Specifically, the external tool is a columnar adaptive to the cross-sectional shape of the inserting passage 31, when the external tool is inserted into the inserting passage 31, at least a part of the external tool press against the inner side surface of the inserting passage 31, so that the rotating cylindrical can drive the plug 3 to rotate in the connecting passage 13.

In another embodiment, in order to control the plug 3 to switch between the released position and the locked position, as in the Embodiment 1, an external tool (such as a column, etc.) is used to drive the plug 3 to move in the connecting passage 13, so that the plug 3 moves from the released position to the locked position; an external tool (such as a hook, etc.) is used to drive the plug 3 to move in the connecting passage 13, so that the plug 3 moves from the locked position to the released position; so as to adjust the position of the plug 3 in the reinforcing part 1.

As shown in Figures 1, 10, 26 and 29, the cross-sectional shape of at least a part of the inserting passage 31 is the same as the cross-sectional shape of the inner ring of the sleeve, at this time, at least a part of the inserting passage 31 is a sleeve structure of a socket wrench, wherein the socket wrench is a common tool in the art, for example, a manually-operated socket wrench from GB T 3390.1-2004, or a manually-operated socket wrench or an electric wrench from other countries standards, the cross-sectional shape of the inserting passage 31 in a sleeve structure is non-circular, including but not limited to triangular or square or hexagonal or octagonal or oval or waist-shaped or petal shaped, etc, the cross-sectional shape of the external tool is adapted to the cross-sectional shape of the inserting passage 31, so that after the external tool is inserted into the inserting passage 31, the plug 3 is driven to rotate in the connecting passage 13, thereby adjusting the position of the plug 3 in the connecting passage 13.

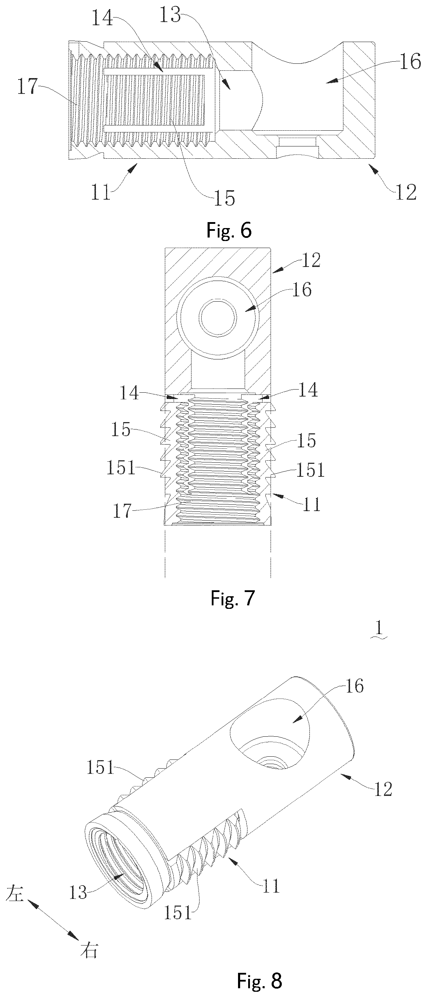

Furthermore, the present invention does not limit the number, position, shape or size of the deformation gap 14, the number of the deformation gap 14 can be one or more, for example, Figure 7, Figure 17, Figure 20, Figure 25, Figure 28.,when there are two deformation gaps 14, the two deformation gaps 14 are respectively arranged on the left and right sides of the connecting end 11, and the left and right sides of the connecting end 11 are respectively defined by the deformation gaps 14 to form an elastic part 15. When the first member 10 is a shelf of a cabinet, the thickness of the first member 10 is relatively small (usually 16 mm or more), after the side surface of the first member 10 is provided with the mounting passage 101, the first member 10 is thinner in the vertical direction at the position of the mounting passages 101 ,when the reinforcing part 1 is slidably inserted into the mounting passage 101, in order to prevent the elastic part 15 from damaging the top or bottom of the first member 10, the elastic part 15 should be arranged in the length direction or width direction of the first member 10, the two elastic parts 15 are respectively arranged at distance along the length direction or width direction of the first member 10, it is ensured that the first member 10 is not damaged by the elastic part 15. wherein, the left and right direction of the present invention is the length direction or width direction of the first member 10 after the reinforcing part 1 is mounted on the first member 10.

The shape of the deformation gap 14 can be V-shaped, U-shaped, 7-shaped, etc, the deformation gap 14 can be continuously or discontinuously arranged, as long as a part of the side wall of the connecting end 11 can be elastically deformed through the deformation gap 14, that is, a part of the connecting end 11 forms the elastic part 15 through the deformation gap 14.
The following describes in detail the structure of the plug 3 of the present invention that drives the elastic part 15 to elastically deform and expand outward.

As shown in Figures 1-9 and Figures 17-20, as a first specific implementation method in which the plug 3 drives the elastic part 15 to elastically deform and expand outward, the inner side surface of the elastic part 15 and the inner side surface of the connecting passage 13 jointly define a first internal threaded part 17, and an outer peripheral side wall of the insert 3 have a first external thread portion 32 which is in cooperative thread connection with the first internal thread portion 17. wherein, an external tool (such as a column, etc.) is inserted into the inserting passage 31 to drive the plug 3 to rotate in the connecting passage 13, and the rotational motion between the first external thread part 32 and the first internal thread part 17 is converted into the sliding of the plug 3 in the connecting passage 13, so that the plug 3 is inserted into the connecting passage 13. Meanwhile, when the plug 3 is inserted into part of the elastic part 15 of the connecting passage 13, the outer peripheral surface of the plug 3 presses against the elastic part 15 to make the elastic part 15 elastically deform and expand outward, so that the fastening protrusion of the elastic part 15 presses against the inner side surface of the mounting passage 101, then the reinforcing part 1 is fastened in the mounting passage 101. The specific processing process of the reinforcing part 1 as follows: the connecting passage 13 is processed with a continuous internal thread structure at the connecting end 11, and then a deformation gap 14 is processed on the side surface of the connecting end 11 to define and form an elastic part 15, so that the internal thread structure on the elastic part 15 and the internal thread structure of the connecting passage 13 together form a first internal thread part 17. The tooth of the first internal thread part 17 can be straight tooth or helical tooth, and the tooth of the first external thread part 32 is adapted to be a straight tooth or a helical tooth.

Furthermore, the first embodiment described above does not limit the structure of the connecting passage 13 at the connecting end 11, for example, along the direction from the connecting end 11 to the mounting end 12, the shape and area of the cross section of the connecting passage 13 at the elastic part 15 are the same (i.e., cylindrical), for another example, along the direction from the connecting end 11 to the mounting end 12, the area of the cross section of the connecting passage 13 at the elastic part 15 gradually decreases (i.e., is frustum-shaped); for another example, along the direction from the connecting end 11 to the mounting end 12, the area of the cross section of the connecting passage 13 at the elastic part 15 first gradually increases then becomes smaller.

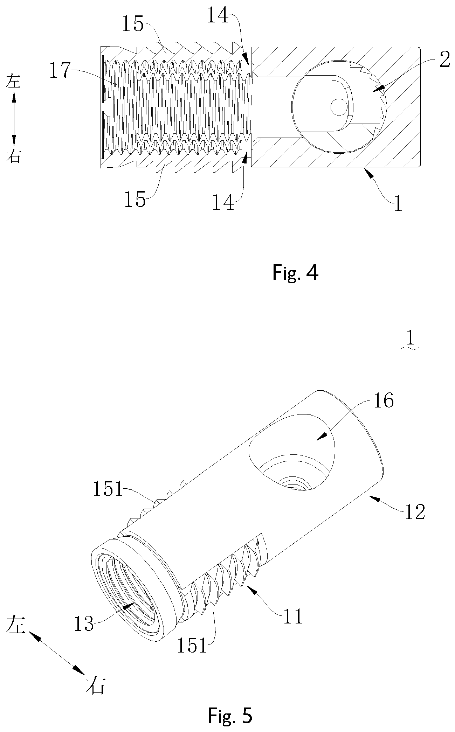

As shown in Figure 4, Figure 7, Figure 12 and Figure 13, along the direction from connecting end 11 to the mounting end 12, the cross-sectional shape and area of the connecting passage 13 in the part of the elastic part 15 are the same, and the cross-sectional area of the outer circumference where the outer contour of the fastening protrusion 151 is located is larger than the cross-sectional area of the outer circumference where the outer contour of the mounting end 12 is located. meanwhile, the plug 3 is a cylindrical structure with a first external threaded part 32 on the outer circumferential wall. In this way, when the reinforcing part 1 is inserted into the mounting passage 101, The fastening protrusion 151 fits with the inner side wall of the mounting channel 101, and the reinforcing part 1 produces a certain friction in the mounting passage 101 to ensure that the insert 3 smoothly screws into the connecting passage 13, at the same time, after the plug 3 is in contact with the elastic part 15, the elastic part 15 is driven to deform elastically, so that the fastening protrusion is tightly pressed against the inner side wall of the mounting passage 101, Which ensuring the fastening effect of the reinforcing part 1 in the mounting passage 101.

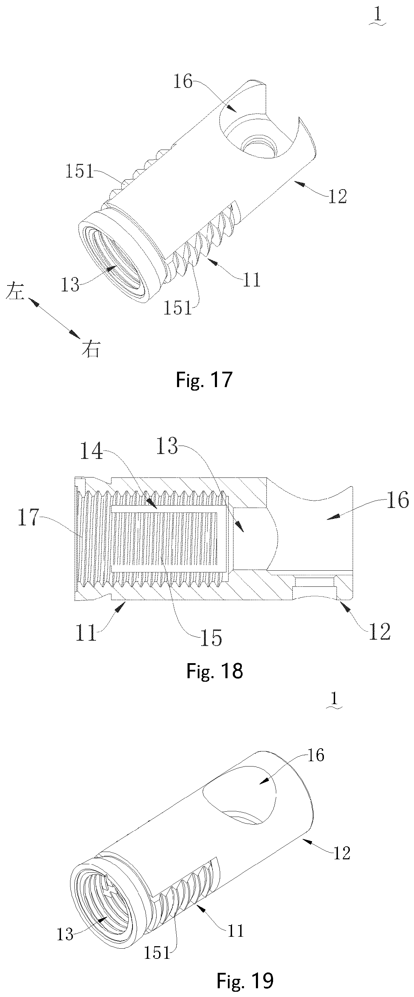

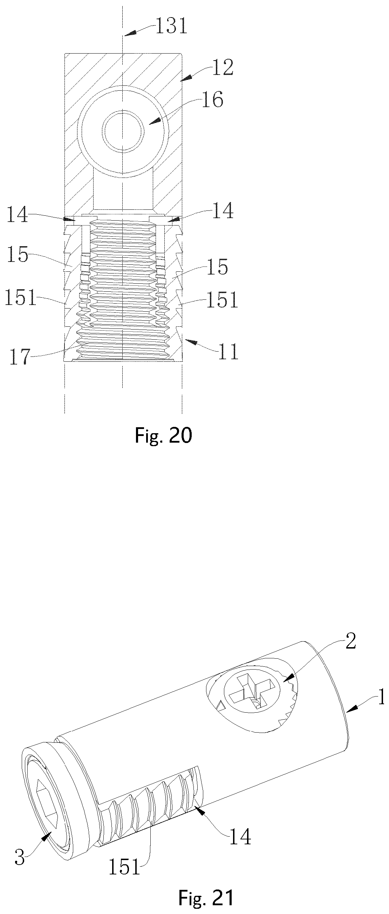

As shown in Figures 19 and 20, along the direction from the connecting end 11 to the mounting end 12, the inner surface of the elastic part 15 gradually approaches the central axis 131 of the connecting passage. Similarly, the plug 3 is a cylindrical structure with a first external threaded part 32 on the outer peripheral surface. The cross-sectional area of the outer circumference where the outer contour of the fastening protrusion 151 is located is equal to the cross-sectional area of the outer circumference where the outer contour of the mounting end 12 is located, or the cross-sectional area of the outer circumference where the outer contour of the fastening protrusion 151 is located is larger than the cross-sectional area of the outer circumference where the outer contour of the mounting end 12 is located. Preferably, the cross-sectional area of the outer circumference where the outer contour of the fastening protrusion 151 is located can be equal to the cross-sectional area of the outer circumference where the outer contour of the mounting end 12 is located, since the plug 3 is a cylindrical structure and the cross-sectional area of the plug 3 is larger than the cross-sectional area of the inner side surface of the elastic part 15, when the plug 3 moves to the part of the elastic part 15 of the connecting passage 13, the plug 3 presses against the elastic part 15 to cause a large elastic deformation, so that the cross-sectional area of the outer circumference where the outer contour of the fastening protrusion 151 is located is larger than the cross-sectional area of the outer circumference where the outer contour of the mounting end 12 is located, then the fastening protrusion is pressed against the inner side surface of the mounting passage 101, thereby ensuring the fastening effect of the reinforcing part 1 in the mounting passage 101.

Furthermore, in the first embodiment, when the plug 3 is fully inserted into the connecting passage 13, the plug 3 can be driven to rotate again to drive the reinforcing part 1 to rotate in the mounting passage 101, thereby fine-tuning the position of the reinforcing part 1 in the mounting passage 101 and improving the mounting accuracy of the reinforcing part 1 in the first member10.

When the reinforcing part 1 needs to be removed from the first member 10, the plug 3 is driven to reversely rotate, so that the plug 3 is moved out of the connecting passage 13 completely, the elastic part 15 is restored to the original state, and the tightening effect between the fastening protrusion 151 on the elastic part 15 and the mounting passage 101 is released, then the reinforcing part 1 can be easily pulled out from the mounting passage 101.

As shown in Figures 21 to 26, as a second specific implementation method in which the plug 3 drives the elastic part 15 to elastically deform and expand outward, the inner peripheral surface of the connecting passage 13 is smooth, and a connecting ring part 18 is formed on the inner side wall of one end of the elastic part 15 close to the mounting space 16 and the outer peripheral side of the connecting ring part 18 is arranged at a distance from the inner peripheral side of the connecting passage 13, a second internal thread part 181 is formed on the inner peripheral side of the connecting ring part 18 ,A second external threaded part 33 is formed on an outer circumferential side wall of the plug 3 and is in mating threaded connection with the second internal thread part 181. An external tool (such as a column, etc.) is inserted into the inserting passage 31 to drive the plug 3 to slide into the connecting passage 13 through a clearance fit, when the plug 3 slides to the connecting ring 18, the plug 3 is driven to rotate relative to the connecting ring 18, and the rotation movement between the second external thread part 33 and the second internal thread part 181 is converted into the sliding of the plug 3 in the connecting ring part 18, so that the plug 3 is inserted further into the connecting passage 13. When the end of the plug 3 press against the step in the connecting passage 13, the plug 3 is driven to rotate again to drive the connecting ring part 18 and the elastic part 15 to elastically deform and expand outwards, so that the fastening protrusion of the elastic part 15 abuts against the inner wall of the mounting passage 101, thereby fastening the reinforcing part 1 in the mounting passage 101. The cross-sectional area of the outer peripheral of the outer contour of the fastening protrusion 151 is larger than or equal to the cross-sectional area of the outer circumference of the outer contour of the mounting end 12.

When the reinforcing part 1 needs to be removed from the first member 10, the plug 3 is driven to reversely rotate, so that the plug 3 is moved out of the connecting passage 13 completely, the elastic part 15 is restored to the original state, and the tightening effect between the fastening protrusion 151 on the elastic part 15 and the mounting passage 101 is released, then the reinforcing part 1 can be easily pulled out from the mounting passage 101.

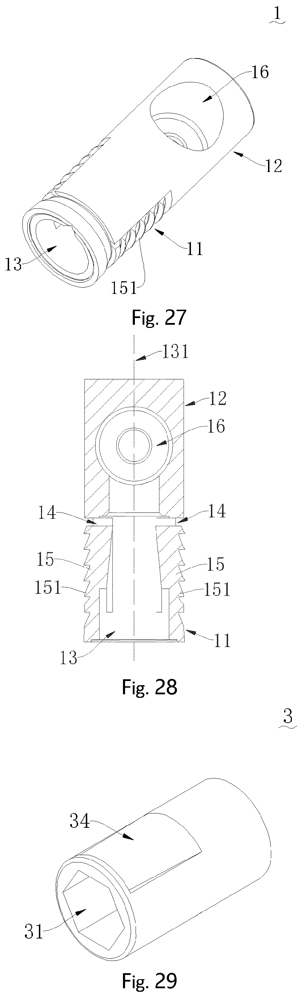

As shown in Figures 27 to 29, as a third specific implementation method in which the plug 3 drives the elastic part 15 to elastically deform and expand outward, the inner peripheral surface of the connecting passage 13 is smooth; along the direction from the connecting end 11 to the mounting end 12, the inner surface of the elastic part 15 close to the mounting space 16 gradually approaches the central axis 131 of the connecting passage. The outer peripheral side surface of the plug 3 is smooth, and the outer side wall of one end of the plug 3 is provided with an unlocking groove 34. When the plug 3 is inserted into the connecting passage 13, the position of the unlocking groove 34 is aligned with the position of the elastic part 15, then an external tool (such as a column, etc.) is inserted into the inserting passage 31 to drive the plug 3 to slide into the connecting passage 13 through a clearance fit, when the position of the unlocking groove 34 slides to the elastic part 15, the plug 3 is driven to rotated a certain angle (for example, 90° or 80°, etc.) in the connecting passage 13, so that the arc-shaped outer side surface of the plug 3 abuts against the elastic part 15, and the elastic part 15 is driven to elastically deform and expand outward, so that the fastening boss of the elastic part 15 press against the inner wall of the mounting passage 101, thereby fastening the reinforcing part 1 in the mounting passage 101. thus, the cross-sectional area of the outer circumference where the outer contour of the fastening protrusion 151 is located is larger than or equal to the cross-sectional area of the outer circumference where the outer contour of the mounting end 12 is located.

When the reinforcing part 1 needs to be removed from the first member 10, the plug 3 is driven to reversely rotate (for example, -90° or -80°, etc.) so that the position of the unlocking groove 34 corresponds to the position of the elastic part 15 (the elastic part 15 is inserted into the unlocking groove 34) to restore the elastic part 15 to its original state, and the tightening effect between the fastening protrusion 151 on the elastic part 15 and the mounting passage 101 is released, then drive the plug 3 to slide completely out of the connecting passage 13, then the reinforcing part 1 can be easily pulled out from the mounting passage 101.

In some embodiments, when the connecting assembly of the Embodiment 1 of the present invention is used to cooperate with the connecting bolt 4, the reinforcing part 1 and the cam 2 are mounted on the first member 10, one end of the connecting bolt 4 protrudes to form a connecting boss 41, and the other end of the connecting bolt 4 is provided with a mounting part 42, the connecting bolt 4 is locked on the second member 20 through the mounting part 42 (the mounting part 42 is, for example, an external thread structure), and an operating part is fixedly arranged between the connecting boss 41 and the mounting part 42, the operating part and the connecting boss 41 are arranged at a distance to form a connecting groove, the operating part is used to be driven by an external tool to drive at least a part of the connecting bolt 4 to rotate, and the operating part is made of plastic; wherein, the outer side surface of the operating part has at least one operating plane or operating hole or operating bump or operating groove, or the cross section of the operating part is adapted to the cross section of the sleeve; the cam 2 can rotate in the rotation direction between the released position and the locked position; when the cam 2 is in the released position, the connecting boss 41 passes through the inserting passage 31 and is inserted into the eccentric groove 23; when the cam 2 is in the locked position, the clamping arm 24 restricts the connecting boss 41 from being pulled out of the eccentric groove 23. Among them, for the specific structure of the connecting bolt 4 of this embodiment and the mounting method of the connecting bolt 4 and the second member 20, please refer to the first connector and its mounting method in <<a First Connector, a Connecting Assembly, and a Connecting System>>disclosed in Chinese Patent Application Publication No. CN114321115 A and details are not describe herein again.

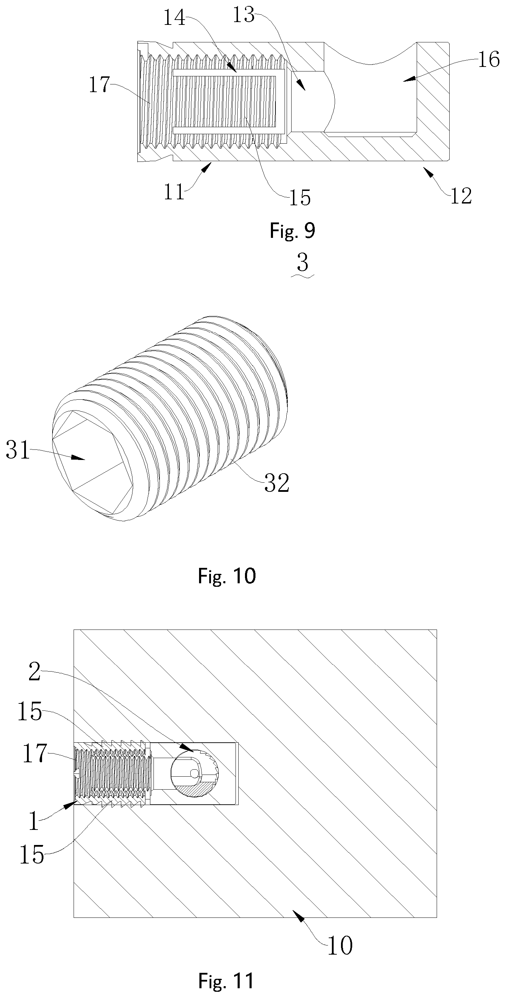

As shown in Figures 11 and 14 to 16, after being mounted on the first member 10, the connecting assembly in the embodiment 1 of the present invention forms a connecting system, which specifically includes: one side of the first member 10 have a mounting passage 101, on the top and bottom of the first member 10 have a connecting hole 102 connecting to the mounting passage 101; the reinforcing part 1 is inserted into the mounting passage 101, and the mounting space 16 corresponds to and communicates with the position of the connecting hole 102; to make the cam 2 to connecting the connecting hole 102, when the plug 3 switches from the released position to the locked position, the plug 3 drives at least a part of the elastic part 15 of the reinforcing part 1 to elastically deform and expand outward,so that the fastening protrusion 151 is pressed against the inner side surface of the mounting passage 101. After the reinforcing part 1 is inserted into the mounting passage 101 ,then one end of the plug 3 is inserted into the connecting passage , when the plug 3 switches from the released position to the locked position, the plug 3 drives at least a part of the elastic part 15 of the reinforcing part 1 to elastically deform and expand outward,so that the fastening protrusion 151 is pressed against the inner side surface of the mounting passage 101 to increase the sliding friction of the reinforcing part 1 in the mounting passage 101, so that the reinforcing part 1 is difficult to slide in the mounting passage 101, thereby fastening the reinforcing part 1 in the mounting passage 101. when it is need to remove the reinforcing part 1 from the first member 10, adjusting the plug 3 to a released position so as to restore the elastic part to an original state, the effect of tightly butting the fastening protrusion 151 on the elastic part 15 and the mounting passage 101 is released, so that the reinforcing part 1 can freely slide in the mounting passage 101, Thus, the reinforcing part 1 is easily pulled out from the mounting passage 101, the operation is convenient and the efficiency is high, and the first member 10 is prevented from being damaged, This effectively ensures the integrity and aesthetics of the panel, and is beneficial to the recycling of the panel.

### Embodiment 2

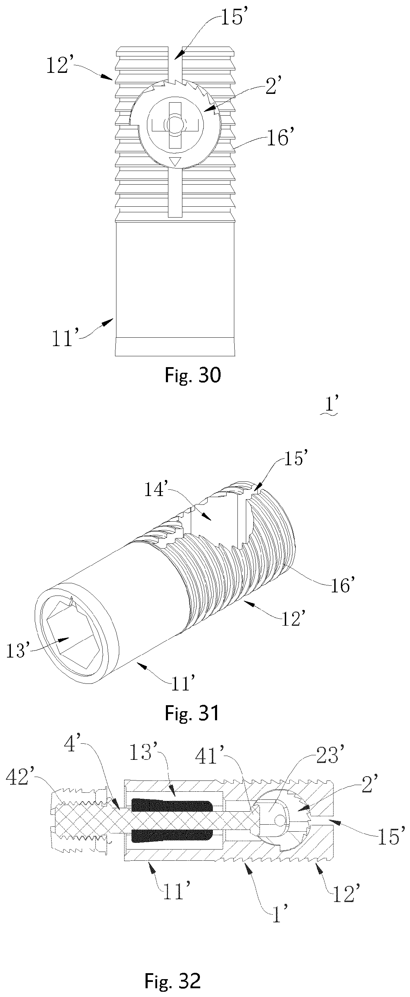

As shown in Figures 30-33, Embodiment 2 of the present invention discloses a connecting assembly which similar structure to the connecting assembly of Embodiment 1, the difference lies in that: the connecting assembly of the present Embodiment 2 does not include the plug 3, and the outer peripheral surface of the cam 2' of the connecting assembly of the present Embodiment 2 is an eccentric arc surface, and the mounting space of the reinforcing part 1' of the connecting assembly is an eccentric hole 14' structure, and the cam 2' is rotated in the eccentric hole 14' to drive a part of the reinforcing part 1' to elastically deform and expand outward, so that the reinforcing part 1' is fastened inside the first member 10.

Specifically, Embodiment 2 of the present invention discloses a connecting assembly, the connecting assembly comprises a reinforcing part 1'and a cam 2' , the reinforcing part 1'has a connecting end 11' and a mounting end 12' positioned opposite each other, the end of the connecting end 11' has a connecting passage 13', the mounting end 12' has an eccentric hole 14' which connected to the connecting passage 13', and the side surface of the mounting end 12' has deformation gap 15' which connected to eccentric hole 14' ,the outer side surface of the mounting end 12' has a fastening protrusion 16'; the outer peripheral surface of the cam 2' is an eccentric arc surface, the outer peripheral surface of the eccentric wheel 2' is adapted to an inner the peripheral surface of the eccentric hole 14', and the cam 2' is rotatably mounted in the eccentric hole 14';The cam 2' can rotate in a rotation direction between a released position and a locked position; and when the caml 2' rotates from the released position to the locked position, the cam 2' drive a part of a side wall of a mounting end 12' to elastically deformed and expands outwards.

It should be noted that, as shown in Figures 30 to 33, the structure of the eccentric hole 14' of the Embodiment 2 means the radius of a part of the cam 2' that gradually increases or gradually decreases around a central axis, and the shape of the outer peripheral surface of the cam 2' is the same as the shape of the eccentric hole 14', so that the cam 2' can be inserted into the eccentric hole 14' through a clearance fit, after the cam 2' is driven to rotate by a certain angle, the part of the cam 2' with a larger radius moves to the part of the eccentric hole 14' with a smaller radius, An outer side wall of the cam 2' press against an inner side wall of the eccentric hole 14', so that the cam 2' driver the a part of the mounting end 12' is elastically deformed and is expand outward.

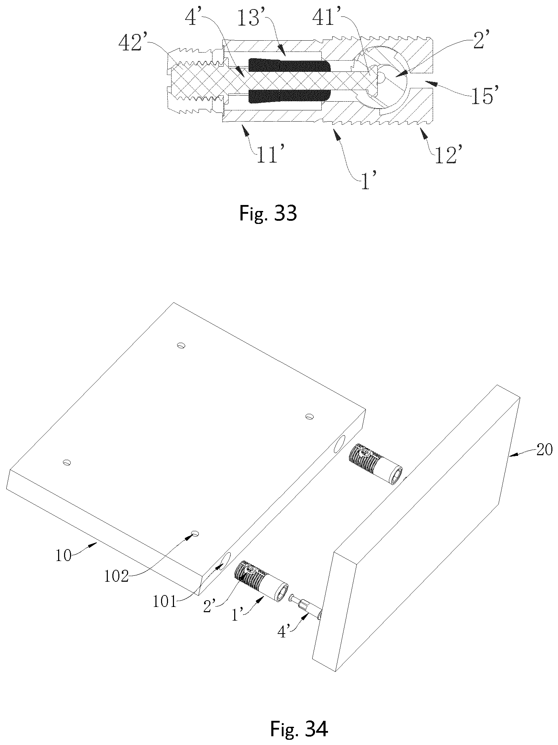

Wherein ,as shown in Figures 32 and 33, the released position of the present invention refers to the position of the cam 2' when the connecting boss 41' of the connecting bolt 4' can pass through the connecting passage 13' and be inserted into the eccentric groove 23' of the cam 2', and the locked position of the present invention refers to the position of the cam2' when the connecting boss 41' is restricted from being pulled out of the eccentric groove 23' of the cam 2'.

During use, the reinforcing part 1' pre-mounted with the cam 2' is slidably inserted into the mounting passage 101 of the first member 10 by a clearance fit, and the position of the eccentric hole 14' corresponds to and communicates with the position of the connecting hole 102 of the first member 10. The reinforcing part 1' is easy to be pulled out from the mounting passage 101 because the sliding friction between the reinforcing part 1' and the mounting passage 101 is small. Therefore, when the connecting boss 41' of the connecting bolt 4' passes through the connecting passage 13' and is inserted into the eccentric groove 23' of the cam 2', the cam 2' is driven to rotate from the released position to the locked position, and the outer peripheral of the cam 2' is pressed against the inner peripheral of the eccentric hole 14', so that a part of the side wall of the mounting end 12' is elastically deformed and expand outward, so that the fastening protrusion 16' on the mounting end 12' is pressed against the inner side surface of the mounting passage 101, thereby increasing the sliding friction of the reinforcing part 1' in the mounting passage 101, so that the reinforcing part 1' is difficult to slide in the mounting passage 101, thereby the reinforcing part 1' is fasten in the mounting passage 101. When it is need to remove the reinforcing part 1' from the first member 10, the cam 2' is driven to rotate to the released position, so that the mounting end 12' restored to its original state, and the tightening effect between the fastening protrusion 16' on the mounting end 12' and the mounting passage 101 is released, so that the reinforcing part 1' can slide freely in the mounting passage 101, then the reinforcing part 1' can be easily pulled out from the mounting passage 101, the operation is convenient and efficient, meanwhile, and the first member 10 is prevented from being damaged, This effectively ensures the integrity and aesthetics of the panel, and is beneficial to the recycling of the panel.

In some embodiments, along viewed from the connecting end 11' to the mounting end 12', the reinforcing part 1' is circular in shape .The reinforcing part 1' is cylindrical or conical shape to adapt to the mounting passage 101 formed by drilling process, reducing the gap between the reinforcing part 1' and the inner side surface of the mounting passage 101, and improving the mounting stability of the reinforcing part 1' in the mounting passage 101.

In some embodiments, as shown in Figure 31, in order to adjust the position of the reinforcing part 1' in the mounting passage 101, at least a part of the connecting passage 13' is used to cooperate with an external tool for insertion to drive the reinforcing part 1' to rotate; the inner side surface of the connecting passage 13' has at least one operating plane or operating protrusion or operating groove; or, the cross-sectional shape of at least a part of the connecting passage 13' is the same as the cross-sectional shape of the inner ring of the sleeve. Specifically, after an external tool (such as a column, etc.) is inserted into the connecting passage 13', the reinforcing part 1' is driven to rotate a certain angle in the mounting passage 101, thereby adjusting the position of the mounting space to ensure that the position of the cam 2' corresponds to and communicates with the position of the connecting hole 102 of the first member, It is ensured that a tool such as a screwdriver passes through the connecting hole 102 and acts on the cam 2', the operation is simple and the efficiency is high, Thus, it is avoide the problem that the mounting space does not correspond to the position of the connecting hole 102, thereby ensuring the integrity and aesthetics of the first member 10. Wherein, in order to drive the reinforcing part 1' to rotate after an external tool (such as a columnar ) is inserted into the connecting passage 13', the cross-sectional shape of at least a part of the connecting passage 13' is non-circular, for example, the cross-sectional shape of a part of the connecting passage 13' close to its opening is non-circular, the cross-sectional shape of another part of the connecting passage 13' is circular; For another example, the overall cross-sectional shape of the connecting passage 13' is same and is in a non-circular shape. Specifically, the outer tool of the embodiment 2 of the present invention is a columnar that adjust to the cross-sectional shape of the connecting passage 13', and when the outer tool is inserted into the connecting passage 13', at least a part of the outer tool and the inner side wall of the connecting passage 13' press against each other, so that the rotating columnar can drive the reinforcing part 1' to rotate in the mounting passage 101. Specifically, the cross-sectional shape of at least a part of the connecting passage 13' is the same as the cross-sectional shape of the inner ring of the sleeve, In this case, at least a part of the connecting passage 13' is a sleeve structure of a sleeve wrench, in which the sleeve wrench is a common tool in the art, for example, a manually-operated socket wrench from GB T 3390.1-2004, or a manually-operated socket wrench or an electric wrench from other countries, The cross section of the connecting passage 13' 11 in the sleeve structure is non-circular, including but not limited to triangular or square or hexagonal or octagonal or oval or lumbar or petal-like, The cross-section of the external tool is adapted to the cross-section of the connecting channel 13' 11, so that the external tool is inserted into the connecting passage 13' and drives the reinforcing part 1' to rotate in the mounting passage101.

As shown in Figure 34, after being mounted on the first member 10, the connecting assembly in the embodiment 2 of the present invention forms a connecting system, which specifically includes: one side of the first member 10 have a mounting passage 101, on the top and bottom of the first member 10 have a connecting hole 102 connecting to the mounting passage 101; the reinforcing part 1' is inserted into the mounting passage 101, the position of the eccentric hole 14' corresponds to and communicates with the position of the connecting hole 102; when the cam 2' switches from the released position to the locked position, the cam 2' drives at least a part of inner side wall of the mounting end 12' to elastically deform and expand outward, so that the fastening protrusion 16' is pressed against the inner side surface of the mounting passage 101. When the reinforcing part 1' pre-installed with the cam 2' is slidably inserted into the mounting passage 101 of the first member 10 by clearance fitting, which drive the cam 2' switches from the released position to the locked position, through an outer peripheral side of the cam 2' to press against an inner peripheral side of the eccentric hole 14', it make a part of inner side wall of the mounting end 12' to elastically deform and expand outward, so that the fastening protrusion 16' of the mounting end 12' is pressed against the inner side surface of the mounting passage 101 to increase the sliding friction of the reinforcing part 1 in the mounting passage 101, so that the reinforcing part 1' is difficult to slide in the mounting passage 101, thereby fastening the reinforcing part 1' in the mounting passage 101. when it is need to remove the reinforcing part 1' from the first member 10, driving the cam 2' to a released position so as to restore the mounting end 12' to an original state, the effect of tightly butting the fastening protrusion 16' on the mounting end 12' and the mounting passage 101 is released, so that the reinforcing part 1' can freely slide in the mounting passage 101, Thus, the reinforcing part 1' is easily pulled out from the mounting passage 101, the operation is convenient and the efficiency is high, and the first member 10 is prevented from being damaged, This effectively ensures the integrity and aesthetics of the panel, and is beneficial to the recycling of the panel.

In addition, the other structures of the reinforcing part 1' of this Embodiment 2 are the same as the other structures of the reinforcing part 1 of the embodiment 1, and the detailed description is omitted here.

Reference throughout this description to the terms "an embodiment" , "some embodiments", "an illustrative embodiment", "an example", "a specific example", ' or "some examples"means that a specific feature, structure, material, or characteristic described in connection with the embodiment or example is included in at least one embodiment or example of the present disclosure. Thus, the appearances of the phrases in various places throughout this description are not necessarily referring to the same embodiment or example of the present disclosure. Furthermore, the specific features, structures, materials, or characteristics can be combined in any suitable manner in one or more embodiments or examples.

Although the embodiments of the present have been shown and described, the skilled in the art can understand that various changes, modifications, substitutions and variants can be made to these embodiments without departing from the principle and purpose of the invention. The scope of the present disclosure is defined by the claims and their equivalents.

## Claims

1. A connecting assembly, wherein, it comprises:
the reinforcing part has a connecting end and a mounting end positioned opposite each other, the end of the connecting end has a connecting passage, and the side surface of the connecting end has at least one deformation gap, a part of the connecting end is defined by the deformation gap to have at least one elastic part, the outer side surface of the elastic part has a fastening protrusion; the outer side surface of the reinforcing part has a mounting space connected to the connecting passage;
the cam is rotatably installed in the mounting space; and
a plug, the plug has an inserting passage running through both ends of the plug, with one end of the plug insert into the connecting passage from the connecting end;
at least a part of the inserting passage is used to cooperate with an external tool for insertion to drive the plug to move in the connecting passage; or, at least a part of the inserting passage is used to cooperate with an external tool for insertion to drive the plug to rotate in the connecting passage;
wherein the inner side surface of the inserting passage has at least one operating plane or operating bump or operating groove; or, the cross-sectional shape of at least a part of the inserting passage matches the cross-sectional shape of the inner ring of the sleeve;
wherein the plug can switch between a released position and a locked position; when the plug switches from the released position to the locked position, the plug drives at least a part of the elastic part to elastically deform and expand outward.

2. The connecting assembly as claimed in claim 1, wherein: it comprises two deformation gaps, these two deformation gaps are respectively arranged on the left and right sides of the connecting end, and the left and right sides of the connecting end are respectively defined by the deformation gaps to form the elastic part.

3. The connecting assembly as claimed in claim 1, wherein :in the observation direction, from the connecting end to the mounting end, the reinforcing part is a circular shape.

4. The connecting assembly as claimed in claim 1, wherein: the inner side surface of the elastic part and the inner side surface of the connecting passage jointly define to form a first internal threaded part, and the outer peripheral side surface of the plug form a first external threaded part threadedly connected with the first internal threaded part.

5. The connecting assembly as claimed in claim 4, wherein, along the direction from the connecting end to the mounting end, the cross-sectional shape and area of the connecting passage in the part of the elastic part are the same, and the cross-sectional area of the outer circumference the place of the outer contour of the fastening protrusion is located is larger than the cross-sectional area of the outer circumference the place of the outer contour of the mounting end is located.

6. The connecting assembly as claimed in claim 4, wherein, along the direction from the connecting end to the mounting end, the inner side surface of the elastic part gradually approaches the central axis of the connecting passage.

7. The connecting assembly as claimed in claim 1, wherein: the inner peripheral surface of the connecting passage is smooth, on the inner side surface of the elastic part closed to one end of the mounting space has a connecting ring part, the outer peripheral side of the connecting ring part is arranged at a distance to the inner peripheral side of the connecting passage, the inner peripheral side of the connecting ring part has a second internal thread part ,the outer side circumference of the plug has a second external thread part threadedly connected to the second internal thread part.

8. The connecting assembly as claimed in claim 1, wherein: the inner peripheral surface of the connecting passage is smooth; along the direction from the connecting end to the mounting end, the inner side surface of the elastic part closed to one end of the mounting space gradually approaches the central axis of the connecting passage;
the outer peripheral surface of the plug is smooth, and on the outer side surface of one end of the plug has an unlocked groove .

9. The connecting assembly as claimed in claim 1, wherein, it also comprises a connecting bolt;
one end of the connecting bolt protrudes to form a connecting boss, the other end of the connecting bolt is provided with a mounting part, an operating part is fixedly provided between the connecting boss and the mounting part, the operating part and the connecting boss are arranged in a distance to form a connecting groove, the operating part is used to be driven by an external tool to drive at least a part of the connecting bolt to rotate, and the operating part is made of plastic; wherein the outer side surface of the operating part has at least one operating plane or operating hole or operating bump or operating groove, or the cross section of the operating part is adapted to the cross section of the sleeve;
the cam has an eccentric groove, and at least one inner side surface of the eccentric groove is provided with a clamping arm; the cam can rotate in the rotation direction between the released position and the locked position;
wherein, when the cam is in the released position, the connecting boss passes through the inserting passage and is inserted into the eccentric groove; when the cam is in the locked position, the clamping arm restricts the connecting boss from being pulled out of the eccentric groove.

10. A connecting system, wherein, it comprises a first member and a connecting assembly as claimed in any one of claims 1 to 9;
on one side of the first member has a mounting passage , and a connecting hole connected to the mounting passage is provided on the top or bottom of the first member; the reinforcing part is inserted into the mounting passage,
and the position of mounting space corresponds to the position of the connecting hole and connected each other ,so that the cam is connected to the connecting hole;
when the plug is switched from the released position to the locked position, the plug drives at least a part of the elastic part to to elastically deform and expand outward, so that the fastening protrusion is pressed against the inner side surface of the mounting passage.

11. A connecting assembly,wherein, it comprises:
A reinforcing part, the reinforcing part has a connecting end and a mounting end opposite to each other, the end of the connecting end has a connecting passage, the mounting end has an eccentric hole connected with the connecting passage, the outer side surface of the mounting end has a deformation gap connected with the eccentric hole, and the outer side surface of the mounting end has a fastening protrusion; and
a cam, the outer peripheral surface of the cam is an eccentric arc surface, and the outer peripheral surface of the cam is matched with the inner peripheral surface of the eccentric hole, and the cam is rotatably installed in the eccentric hole;
wherein, the cam can rotate between released position and locked position in a rotation direction; when the cam rotates from the released position to the locked position, the cam drives a part of the side surface of the mounting end to elastically deform and expand outward.

12. The connecting assembly as claimed in claim 11, wherein, the reinforcing part is circular shape when viewed from the connecting end to the mounting end.

13. The connecting assembly as claimed in claim 11, wherein, at least a part of the connecting passage is used to cooperate with an external tool for insertion to drive the reinforcing part to rotate;
the inner side surface of the connecting passage has at least one operating plane or operating protrusion or operating groove; or the cross-sectional shape of at least a part of the connecting passage is the same as the cross-sectional shape of the inner ring of the sleeve.

14. A connecting system, wherein, it comprises a first member and a connecting assembly as claimed in any one of claims 11 to 13;
on one side of the first member has a mounting passage , and on the top or bottom of the first member has a connecting hole connected to the mounting passage; the reinforcing part is inserted into the mounting passage, and the eccentric hole corresponds to the position of the connecting hole and connected each other, so that the cam is connected to the connecting hole;
when the cam rotates from the released position to the locked position, the cam drives a part of the side surface of the mounting end to elastically deform and expand outward, so that the fastening protrusion is pressed against the inner side surface of the mounting passage.
